# EUROPEAN PATENT APPLICATION

(11) **EP 3 165 457 A2**
(43) Date of publication of application: **10.05.2017**
(21) Application number: 16197280.7
(22) Date of filing: 04.11.2016
(51) Int. Cl.: B64D 1/16, G06Q 10/06, G08B 17/00, A62C 3/02

(54) **METHODS AND SYSTEMS OF APPLYING FIRE RETARDANT BASED ON ONBOARD SENSING AND DECISION MAKING PROCESSES**

(30) Priority: 05.11.2015 US 201562251366 P; 28.10.2016 US 201615337943
(71) Applicant: Lockheed Martin Corporation, Bethesda, Maryland 20817 (US)
(72) Inventor: Zonio, Christopher, Bethesda, Maryland 20817 (US); McMillen, Jonathan C., Bethesda, Maryland 20817 (US); Schlosser, Kevin C., Bethesda, Maryland 20817 (US); Spura, Thomas, Bethesda, Maryland 20817 (US)
(74) Representative: Hoffmann Eitle

(57) **Abstract**

The disclosure is directed to systems and methods for applying fire retardant using aerial vehicles. More particularly, the disclosure is directed to systems and methods for applying fire retardant using onboard sensing and decision making processes with application of the fire retardant using aerial vehicles.

## Description

### Field of the Invention

The invention is directed to systems and methods for applying fire retardant using aerial vehicles. More particularly, the invention is directed to systems and methods for applying fire retardant using onboard sensing and decision making processes with application of the fire retardant using aerial vehicles.

### Background Description

The use of manned aerial vehicles in the fight against wildfires is a common practice. These manned aerial vehicles pose many problems and safety issue concerns, though. For example, amongst many other issues, it is dangerous to fly manned aerial vehicles when visibility is poor.

### SUMMARY OF THE INVENTION

In an aspect of the invention, a system includes: a plurality of sensors provided on an aerial aircraft to sense terrain and fire characteristics; and a controller to determine optimal location of application of fire retardant based on the terrain and fire characteristics.

In an aspect of the invention, a system, comprises: a plurality of sensors encompassing multi-spectral sensing capabilities of external environmental conditions, provided on an aerial aircraft; and a controller to determine optimal location of application of fire retardant based on the external environmental conditions as sensed by the plurality of sensors.

### BRIEF DESCRIPTION OF THE DRAWINGS

The invention is described in the detailed description which follows, in reference to the noted plurality of drawings by way of non-limiting examples of exemplary embodiments of the present invention, in which like reference numerals represent similar parts throughout the several views of the drawings, and wherein:
FIG. 1 shows an aerial vehicle with onboard sensors and decision making capabilities in accordance with aspects of the invention.
FIG. 2 shows an illustrative environment for implementing the steps in accordance with aspects of the invention.
FIG. 3 shows a flow chart implementing processes in accordance with aspects of the invention.

### DETAILED DESCRIPTION OF EMBODIMENTS OF THE INVENTION

The invention is directed to systems and methods for applying fire retardant using aerial vehicles. More particularly, the invention is directed to systems and methods for applying fire retardant using onboard sensing and decision making processes with application of the fire retardant using aerial vehicles. The aerial vehicles can include, for example, helicopters and airplanes, including manned and unmanned aircraft.

In embodiments, the systems and methods described herein are used in both manned aerial vehicles and unmanned aerial vehicles (UAVs) for use in suppressing wildfires. As a result of onboard sensors utilizing multi-spectral sensing capabilities, the UAVs are capable of operating in environmental conditions that are hazardous and/or unacceptable for manned operations, specifically in low visibility and/or at night time. Also, with the use of onboard sensors, both manned aerial vehicles and UAVs are capable of identifying the optimum placement of fire retardant as it approaches a burn area, and applying the retardant at the optimum location in real time.

The present invention provides several advantages which include by way of illustrative examples, amongst others:
(i) providing the capabilities to identify key factors for the optimum location of application of fire retardant to achieve maximum fire suppression results;
(ii) providing the general location of the wildfire location and transmitting this information to onboard and/or off board guidance such that as the aerial vehicle approaches the fire location it can provide optimum release of onboard fire retardant;
(iii) providing the capabilities to operate throughout the full day, whereas manned fire fighting without the capabilities provided herein only occurs during the day time and when visibility is determined be safe for flying; and
(iv) providing consistent results, as opposed to individual pilot idiosyncrasies.

### SYSTEM IMPLEMENTATIONS

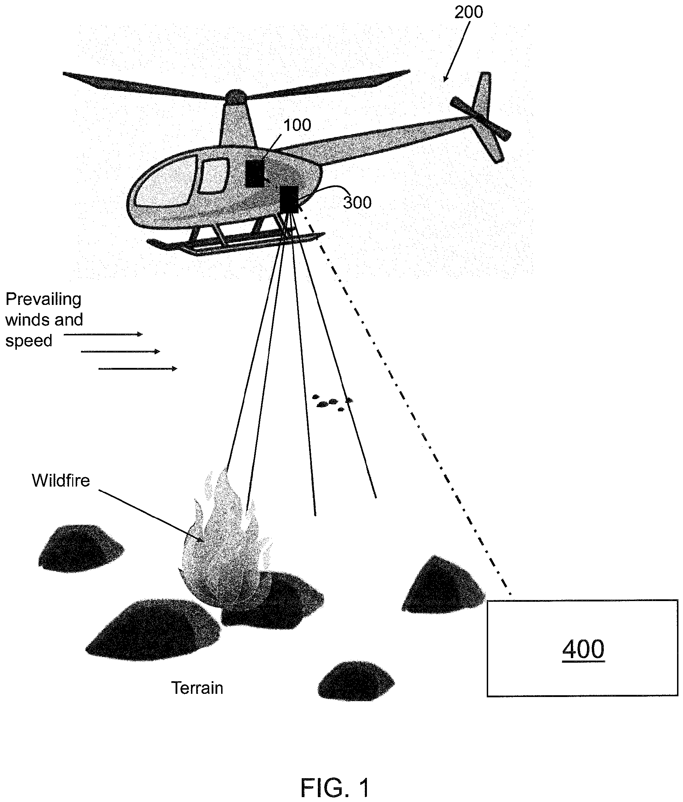

FIG. 1 shows an aerial vehicle with onboard sensors in accordance with aspects of the invention. More specifically, the aerial vehicle 200 can be, e.g., both manned aerial vehicles and unmanned aerial vehicles (UAVs) for use in suppressing wildfires. The aerial vehicle 200 can be, for example, an airplane, helicopter, or any type of unmanned aerial vehicle which can be used for fire suppression.

In embodiments, the aerial vehicle 200 includes a plurality of sensors 300. The sensors 300 include, for example, infrared (IR) cameras or Electro Optical Sensors (EO) onboard the aerial vehicle 200 that can identify localized hot spots of the wildfires. The sensors 300 can further include sensors for identifying terrain sloping and terrain features such as, for example, RADAR, LIDAR, Acoustic Ranging and/or Radar Altimeters. For example, a Radar Altimeter can measure altitude above the terrain beneath an aircraft by timing how long it takes a beam of radio waves to reflect from the ground and return to the aircraft. This type of altimeter provides the distance between the antenna and the ground directly below it, which can be translated into terrain mapping. Terrain features that can be identified include, for example, terrain slopes, natural fire barriers such as rivers or other bodies of water, ridge lines, etc. Sensors can determine prevailing winds and speed by comparing airspeed and heading of the aerial vehicle 200 and GPS track information. Other sensors are also contemplated by the present invention such as environmental sensors, including wind, temperature, and moisture content sensors, and it should be understood that the above noted sensors are only illustrative, exemplary sensors provided for a complete understanding of the invention.

In embodiments, the information from the sensors 300 can be transmitted to a controller, e.g., system module 100, to determine or identify optimum locations for application of fire retardant to achieve maximum fire suppression results. For example, through the collection of this data, e.g., local hot spots, wind speed and terrain information, the system module 100 will assess the potential for fire advancement, including the rate and direction that the fire will be travelling. Based on the information collected from the sensors 200, the controller, e.g., system module 100, will identify where the retardant placement would have the greatest effect, and direct application of fire retardants in that area by transmitting this information to the onboard and/or off board guidance so that the aerial vehicle 200 can be provided with the general location of the wildfire and the location to release the fire retardant. This information can also be given to the ground based systems 400 in order to coordinate ground efforts to control the wildfire. Specifically, ground efforts can be concentrated on other areas of the wildfire for containment purposes.

Accordingly, as a result of onboard sensors utilizing multi-spectral sensing capabilities, amongst other sensing capabilities, the aerial vehicles 200 are capable of operating in environmental conditions that would be otherwise hazardous and/or unacceptable, specifically in low visibility and/or at night time. Also, with the use of onboard sensing, the aerial vehicles 200 are capable of identifying the optimum placement of fire retardant as it approaches a burn area, and to apply the retardant at the optimum location in real time.

### SYSTEM ENVIRONMENT

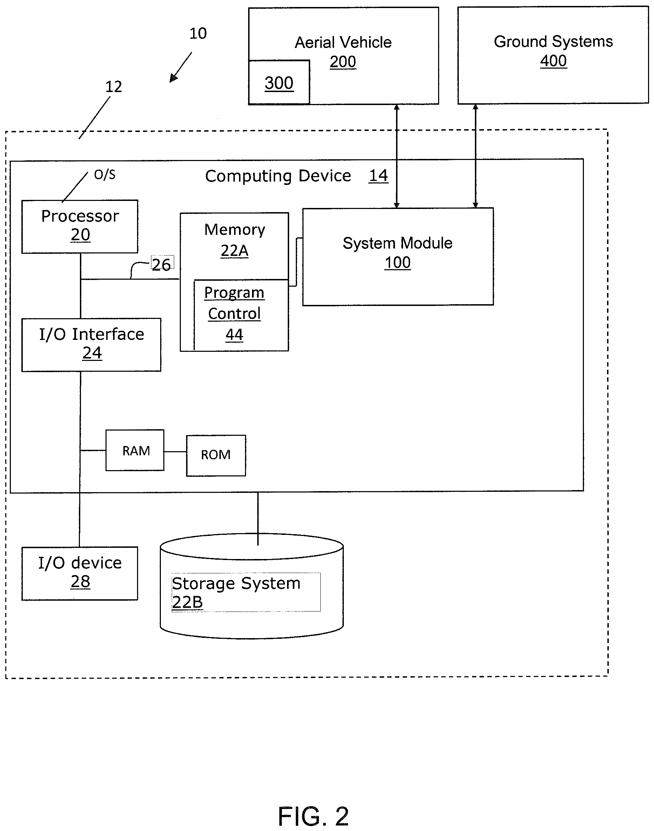

FIG. 2 shows an illustrative environment 10 for managing the processes in accordance with the invention. The environment 10 includes a server or other computing system 12 that can perform the processes described herein. In embodiments, the illustrative environment may be used in the aerial vehicle 200 for assisting in the suppression of fires using fire retardants, as shown illustratively in FIG. 1; although other aerial vehicle systems are also contemplated by the present invention.

The computing system 12 includes a computing device 14 which can be resident on or communicate with a network infrastructure or other computing devices. The computing system 12 can communicate with both an aerial vehicle 200 and a plurality of sensors 300 on the aerial vehicle 200. In embodiments, the computing system 12 can be located on the aerial vehicle 200 or remote from the aerial vehicle 200. In further embodiments, the computing system 12 can communicate with ground based systems 400 such as, for example, ground-based controllers used in fire suppression systems, e.g., central control systems.

The computing device 14 includes a processor 20, memory 22A, an I/O interface 24, and a bus 26. In addition, the computing device includes random access memory (RAM), a read-only memory (ROM), and an operating system (O/S). The computing device 14 is in communication with an external I/O device/resource 28 and the storage system 22B. The I/O device 28 can comprise any device that enables an individual to interact with the computing device 14 (*e.g.,* user interface) or any device that enables the computing device 14 to communicate with one or more other computing devices using any type of communications link or any device that enables the computing device 14 to interact with is environment. By way of example, the I/O device 28 can be sensing devices 300. Further examples of the I/O device 28 can include aircraft specific state/status inputs influencing the plan for application of fire retardant, such as validity of air data measurements, weight (and by calculation, amount) of fire retardant in bucket, bucket state (released/open or closed), etc. Also, the I/O device 28 can be off board I/O from locations other than the Ground System, 400. This could be I/O data delivered through a Radio Frequency data link from a firefighter on the ground in the drop zone commanding emergency delivery wave-off or retardant release.

The processor 20 executes computer program code (*e.g.,* program control 44), which can be stored in the memory 22A and/or storage system 22B. While executing the computer program code, the processor 20 can read and/or write data to/from memory 22A, storage system 22B, and/or I/O interface 24. The program code 44 executes the processes of the invention such as, for example, determining an optimal location for application of fire retardants in order to suppress wildfires. As discussed in more detail herein, by making such determination it is now possible to apply fire retardant in optimal locations using onboard sensing 300 and decision making processes (e.g., computing system 12) with aerial vehicles 200.

The computing device 14 includes the system module 100, which can be implemented as one or more program code in the program code 44 stored in memory 22A as a separate or combined module. Additionally, the system module 100 may be implemented as separate dedicated processors or a single or several processors to provide the functionality of this tool. Moreover, it should be understood by those of ordinary skill in the art that the system module 100 is used as a general descriptive term for providing the features and/or functions of the present invention, and that the system module 100 may comprise many different components such as, for example, the components and/or infrastructure described and shown with reference to FIGS. 1 and 2.

In embodiments, the program code 44 and more specifically the system module 100 communicates with ground based systems 400 such as, for example, ground controllers used in fire suppression systems, e.g., central control systems, and the aerial vehicle 200 and more specifically the sensors and onboard navigation systems (also shown at reference numeral 300 of FIG. 1). The system module 100 is capable identifying the optimum location for application of fire retardant to achieve maximum fire suppression results, as well as provide the general location of the wildfire location and transmit this information to onboard or off board guidance such in combination with the onboard sensors 300 and the logic described herein, can identify key factors for the optimum release of onboard fire retardant. In embodiments, the aircraft can identify it's position, such as by use of GPS or INS devices.

The present invention may be embodied as a system, method or computer program product. The present invention may take the form of a hardware embodiment, a software embodiment or a combination of software and hardware. Furthermore, the present invention may take the form of a computer program product embodied in any tangible storage having computer-usable program code embodied in the medium (non-transitory medium). The computer-usable or computer-readable medium may be medium that can contain or store information for use by or in connection with the instruction execution system, apparatus, or device. The computer-usable or computer-readable medium may be, for example, an electronic, magnetic, optical, electromagnetic, infrared, or semiconductor system, apparatus, or device. More specific examples of the computer readable storage medium, memory or device would include the following: an electrical connection having one or more wires, a portable computer diskette, a hard disk, a random access memory (RAM), a read-only memory (ROM),an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium, memory or device, or computer-usable or computer-readable medium, as used herein, is not to be construed as being transitory signals per se.

### PROCESSES

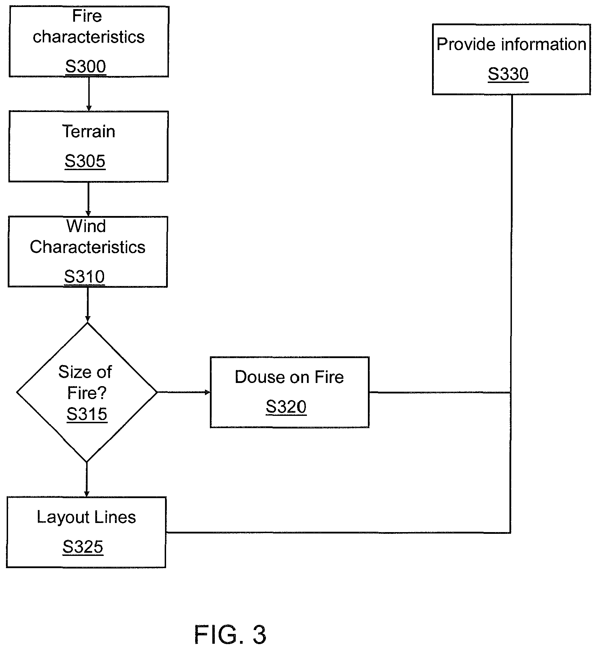

FIG. 3 depicts an exemplary flow for a process in accordance with aspects of the present invention. The exemplary flow can be illustrative of a system, a method, and/or a computer program product and related functionality implemented on the computing system of FIG. 2, in accordance with aspects of the present invention. The method, and/or computer program product implementing the flow of FIG. 3 can be downloaded to respective computing/processing devices, e.g., computing system of FIG. 2 as implemented with the aerial vehicle of FIG. 1.

At step S300, the sensors can determine the fire characteristics. These characteristics can include, for example, speed of travel, local hotspot and location with respect to certain terrain. At step S305, the sensors can determine the terrain. This can include any natural barriers such as ridge lines and bodies of water. The terrain can also include slopes, etc. At step S310, the sensors can determine the prevailing winds and wind speeds. This can be useful for several purposes: to determine how the fire retardant, once released, will travel (taking into account the speed of the aircraft and the wind); and to predict how the fire will progress (direction and growth). At step S315, a determination can be made as to the size of the fire. This becomes useful for fire suppression strategy, e.g., fire retardant may be applied directly onto a small fire; whereas, fire retardant is typically provided at perimeters of larger fires in order to allow the fires to burn themselves out. So, for example, if the determination at step S315 is that the fire is a smaller fire, e.g., below a predetermined size, a decision to release the fire retardant directly on the fire can be provided at step S320. Similarly, if the fire is a larger fire, e.g., above a predetermined size, a decision to release the fire retardant about a perimeter or away from a natural fire retardant barrier can be provided at step S325. For example, if a river is at one side of the fire and a ridge line (both natural barriers) is at another side of the fire, then a decision can be made to release the fire retardant at a third location. At step S330, this information can be provided to the onboard or off board navigation systems so that the aerial vehicle can travel to the desired location and apply the fire retardant at the appropriate location and time. The information can also be provided to ground systems so that coordination can be achieved amongst aerial and ground efforts.

In this way, the aerial vehicles equipped with sensors can identify the hot spots of a fire, and dynamically plan to apply retardant at the most optimum location. The optimum location to be determined in real time based on speed of fire migration, terrain, winds, etc.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular means, materials and embodiments, the present invention is not intended to be limited to the particulars disclosed herein; rather, the present invention extends to all functionally equivalent structures, methods and uses, and combinations thereof such as are within the scope of the appended claims.

## Claims

1. A system, comprising:
a plurality of sensors provided on an aerial aircraft to sense weather, terrain, and fire characteristics; and
a controller to determine optimal location of application of fire retardant based on the weather, terrain and fire characteristics.

2. The system of claim 1, wherein the plurality of sensors include fire hot spot sensors.

3. The system of claim 2, wherein the fire hot spot sensors include at least one of infrared (IR) cameras and Electro Optical Sensors (EO) onboard the aerial vehicle.

4. The system of claim 2 or claim 3, wherein the plurality of sensors include terrain sensors.

5. The system of claim 4, wherein the terrain sensors include at least one of RADAR, LIDAR, Acoustic Ranging and Radar Altimeters.

6. The system of claim 4 or claim 5, wherein the plurality of sensors include environmental sensors.

7. The system of claim 6, wherein the environmental sensors include wind, temperature, and moisture content sensors.

8. The system of any preceding claim, wherein at least one of the controller and plurality of sensors are arranged to communicate with a guidance system.

9. The system of claim 8, wherein the guidance system is an onboard guidance system.

10. The system of claim 8, wherein the guidance system is an off board guidance system.

11. The system of any of claims 8-10, wherein the plurality of sensors are arranged to communicate with ground based systems.

12. The system of any preceding claim, wherein the aerial vehicle is an unmanned aerial vehicle and the plurality of sensors includes multi-spectral sensing capabilities.

13. The system of any of claims 1-11, wherein the aerial vehicle is a manned aerial vehicle.

14. A system, comprising:
a plurality of sensors encompassing multi-spectral sensing capabilities of external environmental conditions, provided on an aerial aircraft; and
a controller to determine optimal location of application of fire retardant based on the external environmental conditions as sensed by the plurality of sensors.

15. The system of claim 14, wherein the plurality of sensors comprise sensors to sense weather, terrain, and fire characteristics and the controller is arranged to determine optimal location of application of fire retardant based on the weather, terrain and fire characteristics.

16. The system of claim 14 or claim 15, wherein the plurality of sensors include fire hot spot sensors comprising at least one of infrared (IR) cameras and Electro Optical Sensors (EO) onboard the aerial vehicle.

17. The system of any of claims 14-16, wherein the plurality of sensors include terrain sensors including at least one of RADAR, LIDAR, Acoustic Ranging and Radar Altimeters.

18. The system of any of claims 14-17, wherein the plurality of sensors include at least one of wind, temperature, and moisture content sensors.

19. The system of any of claims 14-18, wherein at least one of the controller and plurality of sensors are arranged to communicate with an onboard guidance system which directs the aerial aircraft to a general location of the wildfire and the location to release the fire retardant.

20. The system of any of claims 14-19, wherein the plurality of sensors are arranged to communicate with ground based systems to coordinate ground efforts to control the wildfire.
